(19) Europäisches Patentamt
European Patent Office
Office européen des brevets

(11) **EP 4 699 686 A1**

(12) **EUROPEAN PATENT APPLICATION**

(43) Date of publication:
**25.02.2026 Bulletin 2026/09**

(21) Application number: **25192442.9**

(22) Date of filing: **29.07.2025**

(51) International Patent Classification (IPC):
**B01D 53/94** (2006.01)    **B01J 23/63** (2006.01)

(52) Cooperative Patent Classification (CPC):
**B01D 53/945; B01J 23/63;** B01D 2255/1023;
B01D 2255/1025; B01D 2255/2065;
B01D 2255/20715; B01D 2255/2092;
B01D 2255/9155; B01D 2258/01

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.08.2024 JP 2024143372**

(71) Applicant: **MAZDA MOTOR CORPORATION
Hiroshima 730-8670 (JP)**

(72) Inventors:
• **TAKIZAWA, Tomoya
Fuchu-cho, Aki-gun, Hiroshima, 730-8670 (JP)**
• **KURITA, Hiroyuki
Fuchu-cho, Aki-gun, Hiroshima, 730-8670 (JP)**
• **UMEZAWA, Kento
Fuchu-cho, Aki-gun, Hiroshima, 730-8670 (JP)**

(74) Representative: **Müller-Boré & Partner
Patentanwälte PartG mbB
Friedenheimer Brücke 21
80639 München (DE)**

(54) **CATALYZED PARTICULATE FILTER AND METHOD FOR PRODUCING THE SAME**

(57)    A catalyzed particulate filter 10 is a filter that is arranged in an exhaust passage 11 of an engine and captures particulate matter in exhaust gas, and includes a support 10A that is porous, and a catalytic layer 20 provided on a wall surface 16A of the support 10A, and the catalytic layer 20 has a density of 2.0 g/cm$^3$ or higher.

FIG.4

EP 4 699 686 A1

**Description**

BACKGROUND

The present disclosure relates to a catalyzed particulate filter and a method for producing the same.

Exhaust gas emitted from an engine contains not only HC (hydrocarbon), CO (carbon monoxide), and NOx (nitrogen oxide) but also particulate matter (hereinafter also referred to as "PM") containing carbon as a main component. Since the PM causes air pollution, emission regulations for the PM, in addition to harmful gas components such as HC, CO, and NOx, have been progressively tightened.

As a method for reducing the emission amount of the PM, a method of capturing the PM by disposing a filter in an exhaust gas passage is generally used. When the amount of the PM captured by the filter increases, the PM is removed by combusting the PM to regenerate the filter.

Such a filter includes a filter body on which a PM combustion catalyst for promoting combustion of the PM is supported. In addition to the PM combustion catalyst, an exhaust gas purification catalyst for purifying the harmful gas components is also supported on the filter body.

When the catalyst is provided on the filter, the combustion of the PM and the purification of the harmful gas components can be promoted, but the pressure loss of the filter (also referred to as "pressure loss" in this specification) increases due to the reduction in the flow path for the exhaust gas. A technique for reducing the increase in such pressure loss has been reported (see, for example, Japanese Unexamined Patent Publication No. 2023-061613).

Japanese Unexamined Patent Publication No. 2023-061613 discloses a particulate filter used for capturing particulate matter in exhaust gas emitted from an internal combustion engine, including a wall-flow type base material and a coating layer formed on the base material. The base material includes: inlet cells having open ends only on an exhaust gas inflow side; outlet cells having open ends only on an exhaust gas outflow ends; and partitions partitioning the inlet cells and the outlet cells and having multiple pores communicating the inlet cells and the outlet cells. The coating layer is provided on wall surfaces of the pores and contains first inorganic oxide and a second inorganic oxide, the first inorganic oxide has a mean particle diameter larger than that of the second inorganic oxide, and the weight ratio of the second inorganic oxide is from 10% to 50% inclusive when the total weight ratio of the first inorganic oxide and the second inorganic oxide is 100%. This document describes that with this configuration, the increase in pressure loss due to formation of the coating layer can be reduced.

SUMMARY

In recent years, due to the tightening of regulations, a very high PM capturing rate is required for the particulate filter. In order to realize this, it is necessary to considerably reduce the diameters of the pores in the partitions of the filter.

Japanese Unexamined Patent Publication No. 2023-061613 describes only examples using a honeycomb base material having a mean pore diameter of 15 $\mu$m, and fails to specifically examine the case where the partitions have pores having smaller diameters. As the pore diameters decrease, the increase in pressure loss due to the catalyst coating layer increases significantly, and therefore, a further solution is desired.

Hence, the present disclosure is intended to provide a catalyzed particulate filter and a method for producing the same, capable of suppressing an increase in pressure loss even when pores in the support are reduced in diameter.

**In** order to solve the above problems, an aspect of a catalyzed particulate filter disclosed herein is a catalyzed particulate filter that is arranged in an exhaust passage of an engine and captures particulate matter in exhaust gas, the catalyzed particulate filter including:

a support that is porous; and a catalytic layer provided on an exhaust gas passage wall of the support, the catalytic layer having a density of 2.0 g/cm$^3$ or higher.

The inventors of the present application have focused on and analyzed the pore structure of the porous support, and as a result, they have found that there is a correlation between the pore volume and the pressure loss, and that the pore volume is related to the density of the catalytic layer. **In** other words, it is possible to effectively suppress the increase in pressure loss in the catalyzed particulate filter by setting the density of the catalytic layer within the range even when the pores in the support are reduced in diameter.

It is preferred that a coating amount of a catalyst material contained in the catalytic layer is from 30 g/L to 200 g/L inclusive.

With such a configuration, a sufficient catalyst amount is secured, and therefore, sufficient catalyst performance can be secured.

It is preferred that the support has multiple cells defined by porous partitions, and a mean pore diameter D50 of pores inside the partitions is from 7 $\mu$m to 15 $\mu$m inclusive.

With such a configuration, the pore structure inside the partitions is as described above, and therefore, the particulate capturing rate of the partitions can be improved.

The catalyst material contained in the catalytic layer may contain a support material made of at least one of Ce-containing Zr-based composite oxide, Ce-free Zr-based composite oxide, or alumina-based composite oxide.

With such a configuration, the catalyzed particulate filter can be provided with high particulate combustion performance and exhaust gas purification performance.

It is preferred that a content of the catalyst material containing the alumina-based composite oxide in the catalytic layer is less than 10 mass%.

With such a configuration, it is possible to easily adjust the density of the catalyst and effectively suppress the increase in pressure loss by setting the content of the alumina-based composite oxide within the range.

It is preferred that the catalyst material contains the Ce-containing Zr-based composite oxide, and a content of the catalyst material containing the Ce-containing Zr-based composite oxide in the catalytic layer is from 40 mass% to 60 mass% inclusive.

With such a configuration, it is possible to easily adjust the density of the catalyst and effectively suppress the increase in pressure loss by setting the content of the Ce-containing Zr-based composite oxide within the range.

It is preferred that the catalyst material contains the Ce-free Zr-based composite oxide, and a content of the catalyst material containing the Ce-free Zr-based composite oxide in the catalytic layer is from 20 mass% to 50 mass% inclusive.

With such a configuration, it is possible to easily adjust the density of the catalyst and effectively suppress the increase in pressure loss by setting the content of the Ce-free Zr-based composite oxide within the range.

It is preferred that a mean particle diameter D50 of the catalyst material contained in the catalytic layer is from 0.1 $\mu$m to 0.5 $\mu$m inclusive.

With such a configuration, the density of the catalyst can be adjusted easily.

It is preferred that the support has multiple cells defined by porous partitions, and the catalyzed particulate filter further includes a capturing layer that is formed on surfaces of the partitions facing the cells and that captures the particulate matter.

With such a configuration, the capturing layer is provided, thereby improving the particulate capturing rate.

An aspect of a method for producing a catalyzed particulate filter disclosed herein is

a method for producing a catalyzed particulate filter that is arranged in an exhaust passage of an engine and captures particulate matter in exhaust gas,
the catalyzed particulate filter including: a support that is porous; and a catalytic layer provided on an exhaust gas passage wall of the support,
the catalytic layer having a density of 2.0 g/cm$^3$ or higher,
the method including: mixing a catalyst material as a raw material of the catalytic layer and a solvent to form a slurry;
milling the slurry to make a mean particle diameter D50 of the slurry a predetermined value; and
coating the exhaust gas passage wall of the support with the slurry, in this order.

With such a configuration, a catalyzed particulate filter which can achieve both a high particulate capturing rate and suppression of increase in pressure loss can be provided.

As described above, according to the present disclosure, it is possible to achieve both a high particulate capturing rate and suppression of increase in pressure loss by setting the density of the catalytic layer within the range in the catalyzed particulate filter.

BRIEF DESCRIPTION OF DRAWINGS

[FIG. 1] FIG. 1 is a view of a state where an example of a catalyzed particulate filter according to the present disclosure is arranged in an exhaust gas passage of an engine.
[FIG. 2] FIG. 2 is a front view of the filter of FIG. 1.
[FIG. 3] FIG. 3 is an enlarged cross-sectional view of a portion of the filter illustrated in FIG. 1.
[FIG. 4] FIG. 4 is an enlarged cross-sectional view of a portion of a partition in the filter illustrated in FIG. 3.
[FIG. 5] FIG. 5 is a view corresponding to FIG. 3, illustrating another example of the catalyzed particulate filter according to the present disclosure.
[FIG. 6] FIG. 6 is a graph showing a relationship between a mean pore diameter D50 and a PM capturing rate of partitions of a support.
[FIG. 7] FIG. 7 is a graph showing a mean pore diameter D50 dependency of the PM capturing rate and the pressure loss in PF samples of Examples 4 and 10 to 13.

[FIG. 8] FIG. 8 is a graph showing a mean pore diameter D50 dependency of the PM capturing rate and the pressure loss in PF samples of Examples 7 and 14 to 16.

[FIG. 9] FIG. 9 is a graph showing a relationship between the coating amount of the catalyst material and the pressure loss in the PF samples of Examples 1 to 3 and Comparative Examples 1 to 3.

[FIG. 10] FIG. 10 is a graph showing a relationship between the coating amount of the catalyst material and the pressure loss in the PF samples of Examples 7 to 9 and Comparative Examples 5 and 6.

[FIG. 11] FIG. 11 is a graph showing pore distributions of a support alone (without catalytic layer) and the PF samples of Examples 2 and 3.

[FIG. 12] FIG. 12 is a graph showing pore distributions of a support alone (without catalytic layer) and the PF samples of Comparative Examples 2 and 3.

[FIG. 13] FIG. 13 is a graph showing a relationship between the density of the catalytic layer and the pressure loss in the PF samples of Examples 4 to 6 and Comparative Example 4.

[FIG. 14] FIG. 14 is a flowchart showing an example of a method for producing a catalyzed particulate filter according to the present disclosure.

[FIG. 15] FIG. 15 is an explanatory view of volume measurement by the constant volume expansion method.

[FIG. 16] FIG. 16 is a graph showing a relationship between the pressure loss $\Delta P_R$ and the pressure loss $\Delta P_E$.

[FIG. 17] FIG. 17 shows graphs of light-off performances of three components in the PF samples of Examples 1 to 9 and Comparative Examples 1 to 6.

DETAILED DESCRIPTION

Embodiments of the present disclosure will now be described in detail with reference to the drawings. The following description of preferred embodiments is merely an example in nature, and is not intended to limit the scope, applications or use of the present disclosure.

<Catalyzed Particulate Filter>

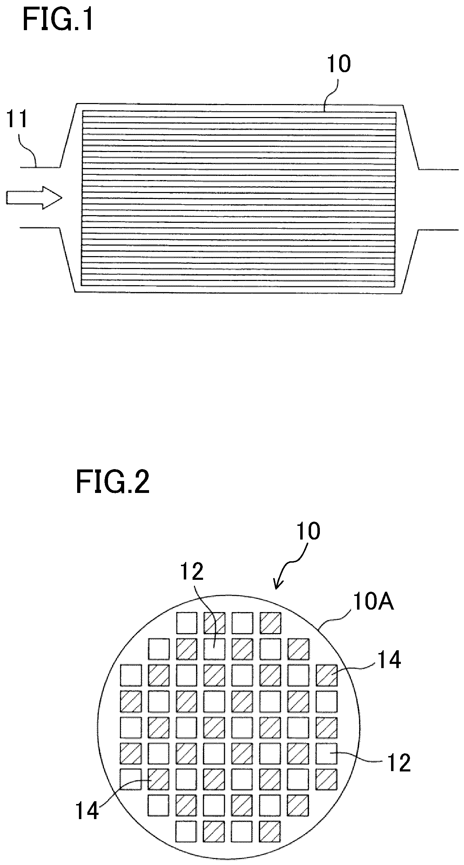

As illustrated in FIG. 1, a catalyzed particulate filter 10 (hereinafter also simply referred to as a "filter 10") is arranged in an exhaust passage 11 of an engine such as a diesel engine and a gasoline engine, and captures PM in exhaust gas. The filter 10 preferably has a function of purifying harmful gas components such as HC, CO, and NOx in exhaust gas.

Although not shown, the exhaust passage 11 upstream of the filter 10 in the flow of the exhaust gas can be provided with a catalyst converter (not shown) for purifying the harmful gas components of the exhaust gas, for example. Thus, the harmful gas components are purified also by the catalyst converter on the upstream side, so that the amount of supporting the catalyst for purifying the harmful gas components by the filter 10 can be reduced, which is advantageous for suppressing the increase in exhaust pressure loss. The harmful gas components can be purified by two-stage configuration of the catalyst converter on the upstream side and the catalyst on the filter 10, thereby keeping the capacity of the catalyst converter low.

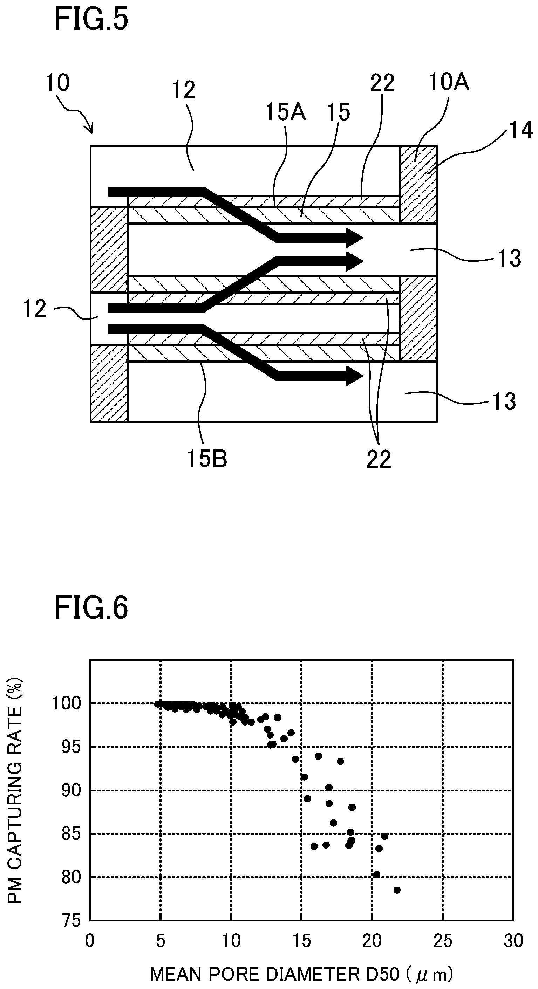

As illustrated in FIGS. 2 to 4, the filter 10 includes a porous support 10A and a catalytic layer 20 provided on the wall surfaces 16A (exhaust gas passage walls) of pores 16 (exhaust gas passages) in the support 10A. As illustrated in FIG. 5, the filter 10 may further include a capturing layer 22.

[Support]

The support 10A is not particularly limited as long as it is a porous base material generally used for a particulate filter, and is, for example, a wall-flow type base material made of an inorganic porous material such as cordierite, SiC, $Si_3N_4$, sialon, and $AlTiO_3$.

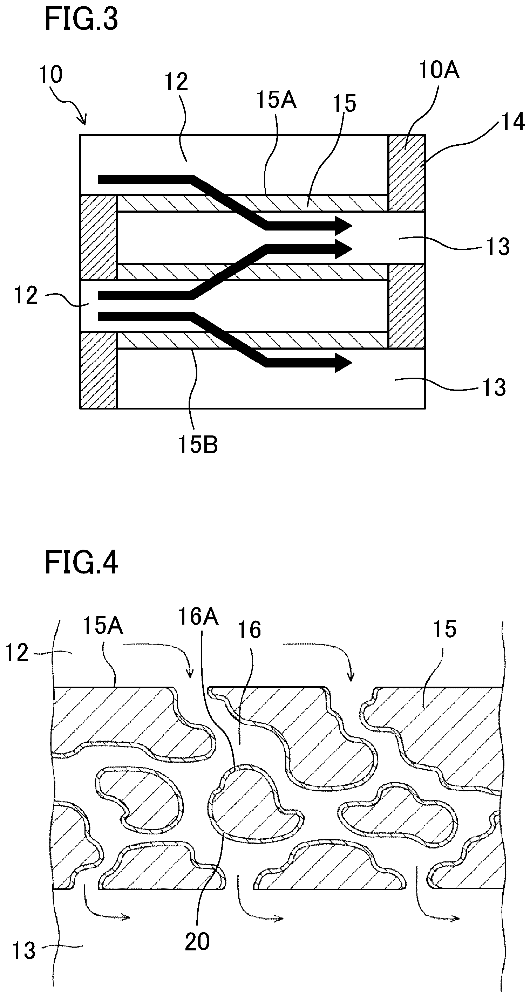

As schematically illustrated in FIGS. 2 and 3, the wall-flow type support 10A has a honeycomb structure and includes multiple cells 12 and 13 extending in parallel to each other. The cells 12 each form an exhaust gas inflow passage having a downstream end closed by a plug 14. The cells 13 each form an exhaust gas outflow passage having an upstream end closed by a plug 14. The cells 12, 13 are defined by thin, porous partitions 15 and are arranged alternately with one another. The hatched areas in FIG. 2 show the plugs 14 at the upstream ends of cells 13.

As illustrated by the arrows in FIGS. 3 and 4, the exhaust gas flowing into the cells 12 flows out into the adjacent cells 13 through the pores 16 of the partitions 15. In other words, as illustrated in FIG. 4, the partitions 15 have fine pores 16 therein, which communicate the cells 12 and 13 with each other, and the exhaust gas passes through the pores 16. The PM in the exhaust gas is mainly captured and deposited on the wall surfaces 15A of the partitions 15 facing the cells 12 and the wall surfaces 16A of the pores 16.

[Catalytic Layer]

A catalytic layer 20 is supported on the wall surfaces 16A of the pores 16 inside the partitions 15 of the support 10A. The catalytic layer 20 may also be formed on wall surfaces 15A of the partitions 15 facing the cells 12 and the wall surfaces 15B of the partitions 15 facing the cells 13, but this is not always necessary.

· Catalyst Material

The catalytic layer 20 contains a catalyst material which functions as a PM combustion catalyst that promotes combustion of PM. The catalytic layer 20 may contain a catalyst material which functions as an exhaust gas purification catalyst, preferably a three-way catalyst, for purifying harmful gas components such as HC, CO, and NOx contained in exhaust gas.

Such a catalyst material is not particularly limited, and a catalyst material used as a generally known PM combustion catalyst and exhaust gas purification catalyst can be adopted. Examples of the catalyst material include noble metal catalysts such as Pt, Pd, and Rh. These noble metal catalysts are used in a state of being supported on a support material composed of, for example, inorganic oxide particles. The catalytic layer 20 may contain, as a catalyst material, a support material containing no noble metal catalyst.

Examples of an inorganic oxide forming the support material include a Ce-containing Zr-based composite oxide (also referred to as a "Ce-based composite oxide"), a Ce-free Zr-based composite oxide (also merely referred to as a "Zr-based composite oxide"), and an alumina-based composite oxide (also referred to as an "activated alumina").

The catalyst material contained in the catalytic layer 20 may contain a support material made of at least one of the Ce-containing Zr-based composite oxide, Ce-free Zr-based composite oxide, or alumina-based composite oxide, as long as the catalytic layer 20 satisfies the range of the density described later. The catalyst material preferably contains at least one of the Ce-containing Zr-based composite oxide or Ce-free Zr-based composite oxide.

The Ce-containing Zr-based composite oxide has an oxygen storage/release capacity of storing oxygen under lean conditions and releasing active oxygen under stoichiometric or rich conditions by reversibly proceeding a reaction involving a valence change of Ce. The active oxygen is advantageous for PM combustion. The three-way catalyst provides a stoichiometric atmosphere where the exhaust gas purification performance is easily exhibited by the oxygen storage/release capacity. Specific examples of the Ce-containing Zr-based composite oxide include a composite oxide of Ce and Zr and a composite oxide of Ce, Zr, and a rare-earth element (such as Nd, La, Y, and Pr).

The Ce-free Zr-based composite oxide has high ion conductivity, takes oxygen from the surroundings through oxygen exchange reaction, and releases a large amount of active oxygen effective for PM combustion and purification of harmful gas components. Specific examples of the Ce-free Zr-based composite oxide include a composite oxide of Zr and a rare-earth element (such as Nd, La, Y, and Pr) other than Ce.

The alumina-based composite oxide has a high specific surface area and is excellent in contact with exhaust gas, and therefore is advantageous for PM combustion and purification of harmful gas components. In addition, the alumina-based composite oxide is excellent in heat resistance, and therefore, the durability of the catalytic layer 20 improves. Specific examples of the alumina-based composite oxide include La-containing alumina and pure alumina.

· Other Components

The catalytic layer 20 may contain, in addition to the catalyst material, other components such as a binder component such as a Y-stabilized zirconia binder, a catalyst poisoning inhibitor such as an alkaline earth metal, and the like, as necessary. The other components are not particularly limited, and can be components generally used in the exhaust gas purification catalyst. The content of the other components in the catalytic layer 20 is not particularly limited, and can be determined, as appropriate, according to the function and the like.

· Mean Particle Diameter D50 of Catalyst Material in Catalytic Layer

The mean particle diameter D50 of the catalyst material (all catalyst materials when multiple types of catalyst materials are included) contained in the catalytic layer 20 is preferably from 0.1 $\mu$m to 0.5 $\mu$m inclusive, more preferably from 0.1 $\mu$m to 0.4 $\mu$m inclusive. This allows the catalytic layer 20 to be efficiently formed on the wall surfaces 16A of the pores 16 inside the partitions 15.

· Coating Amount of Catalyst Material in Catalytic Layer

The coating amount of the catalyst material in the catalytic layer 20 is preferably from 30 g/L to 200 g/L inclusive, more preferably from 44 g/L to 160 g/L inclusive, in light of ensuring a sufficient catalytic performance and suppressing the increase in pressure loss.

[Capturing Layer]

As illustrated in FIG. 5, the filter 10 may further include a capturing layer 22 that is formed on wall surfaces 15A of the partitions 15 facing cells 12 and captures PM. This capturing layer 22 allows the PM capturing rate to be improved. In particular, in the case where the mean pore diameter D50 of the pores 16 in the support 10A is relatively large, when the filter 10 includes the capturing layer 22, the PM capturing rate can be effectively improved.

The capturing layer 22 can be formed by the same material as that of the catalytic layer 20.

The mean particle diameter D50 of the catalyst material contained in the capturing layer 22 is, for example, from 5 $\mu$m to 10 $\mu$m inclusive, preferably from 6 $\mu$m to 8 $\mu$m inclusive. This makes it difficult for the slurry for forming the capturing layer 22 to enter the pores 16 inside the partitions 15, facilitates the formation of the capturing layer 22 on the wall surfaces 15A, and promotes capturing of PM by the capturing layer 22.

[Relationship between Mean Pore Diameter D50 and PM Capturing Rate of Support]

FIG. 6 shows the relationship between the mean pore diameter D50 and the PM capturing rate of the support (without catalytic layer and capturing layer. The details of composition of the support used in the test will be described later).

As illustrated in FIG. 6, it is found that the smaller the mean pore diameter D50, the higher the PM capturing rate of the support. In particular, the PM capturing rate is 82% or higher when the mean pore diameter D50 is about 19 $\mu$m or less, 90% or higher when the mean pore diameter D50 is about 15 $\mu$m or lower, and 95% or higher when the mean pore diameter D50 is about 14 $\mu$m or lower. The results shown in FIG. 6 demonstrate that the structure of the pores 16 inside the partitions relate to the PM capturing rate.

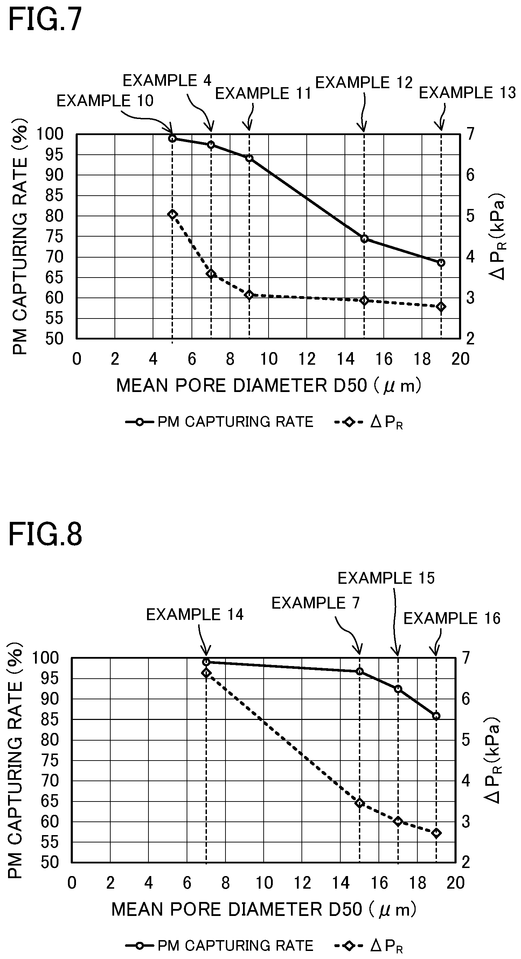

FIG. 7 shows the relationship of the mean pore diameter D50 of pores 16 in the support 10A with the PM capturing rate and the pressure loss for PF samples of Examples 4 and 10 to 13 (with the catalytic layer and without the capturing layer). FIG. 8 shows the relationship of the mean pore diameter D50 of pores 16 in the support 10A with the PM capturing rate and the pressure loss for PF samples of Examples 7 and 14 to 16 (with catalytic layer and capturing layer).

As illustrated in FIG. 7, in the case of providing no capturing layer 22, the mean pore diameter D50 of pores 16 in the support 10A is, for example, 5 $\mu$m or higher, preferably 7 $\mu$m or higher, in light of suppressing the increase in pressure loss. In light of securing an excellent PM capturing rate, the mean pore diameter D50 can be, for example, 19 $\mu$m or less, more preferably 15 $\mu$m or less. In addition, in consideration of FIGS. 7 and 6, the mean pore diameter D50 is preferably 14 $\mu$m or less, more preferably 9 $\mu$m or less, particularly preferably 8 $\mu$m or less.

As illustrated in FIG. 8, in the case of providing the capturing layer 22, the overall PM capturing rate improves but the pressure loss increases compared to the case of providing no capturing layer 22. In the case of providing the capturing layer 22, in light of suppressing the pressure loss, the mean pore diameter D50 of the pores 16 in the support 10A can be 14 $\mu$m or higher, preferably more than 14 $\mu$m. In light of securing an excellent PM capturing rate, the mean pore diameter D50 can be, for example, 19 $\mu$m or less, more preferably 17 $\mu$m or less, yet more preferably 15.5 $\mu$m or less, further more preferably 15 $\mu$m or less.

The mean pore diameter D50 of the pores 16 inside the partitions 15 is, for example, from 5 $\mu$m to 19 $\mu$m inclusive, preferably from 7 $\mu$m to 15 $\mu$m inclusive. In the case of providing no capturing layer 22, the mean pore diameter D50 is more preferably from 7 $\mu$m to 14 $\mu$m inclusive, yet more preferably from 7 $\mu$m to 9 $\mu$m inclusive, further more preferably from 7 $\mu$m to 8 $\mu$m inclusive. In the case of providing a capturing layer 22, the mean pore diameter D50 is preferably from 14 $\mu$m to 15.5 $\mu$m inclusive, more preferably more than 14 $\mu$m and 15 $\mu$m or less.

By making the structure of pores 16 inside the partitions 15 as described above, the PM capturing rate of the support 10A can be improved while suppressing the increase in pressure loss.

[Density of Catalytic Layer]

In the filter 10 according to the present disclosure, the density of the catalytic layer 20 is 2.0 g/cm$^3$ or higher. Details will be described below.

The inventors of the present application have focused on and analyzed the pore structure of the porous support, and as a result, they have found that there is a correlation between the pore volume and the pressure loss, and that the pore volume is related to the density of the catalytic layer.

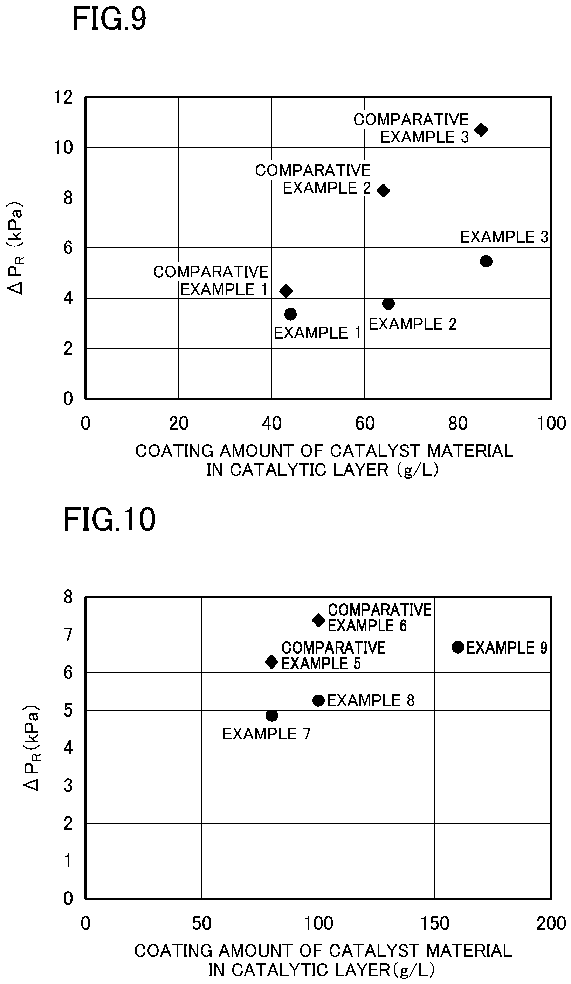

FIG. 9 shows the relationship between the coating amount of the catalyst material contained in the catalytic layer 20 and the pressure loss $\Delta P_R$ in the PF samples of Examples 1 to 3 and Comparative Examples 1 to 3 to be described later. As can be seen in FIG. 9, the pressure loss tends to increase as the coating amount of the catalyst material increases. As shown in Table 1 to be described later, the PF samples of Examples 1 to 3 and the PF samples of corresponding Comparative Examples 1 to 3 have approximately the same coating amount of the catalyst material but have different densities of the catalytic layer 20. Specifically, the density of the catalytic layer 20 satisfies the above range in the PF samples of Examples 1 to 3, whereas the density does not satisfy the above range in the PF samples of Comparative Examples 1 to 3. As illustrated in FIG. 9, the PF samples of Examples 1 to 3 in which the densities satisfy the range exhibit a suppressed increase in pressure loss compared to the PF samples of Comparative Examples 1 to 3 in which the densities do not satisfy the range.

The same tendency was seen also in the case of providing the capturing layer 22. Specifically, FIG. 10 shows the relationship between the coating amount of the catalyst material contained in the catalytic layer 20 and the pressure loss $\Delta P_R$ in the PF samples of Examples 7 to 9 and Comparative Examples 5 and 6 to be described later. Also in the case of providing the capturing layer 22, as illustrated in FIG. 10, the PF samples of Examples 7 to 9 in which the densities of the catalytic layers 20 satisfy the range exhibit a suppressed increase in pressure loss compared to the PF samples of Comparative Examples 5 and 6 in which the densities do not satisfy the range.

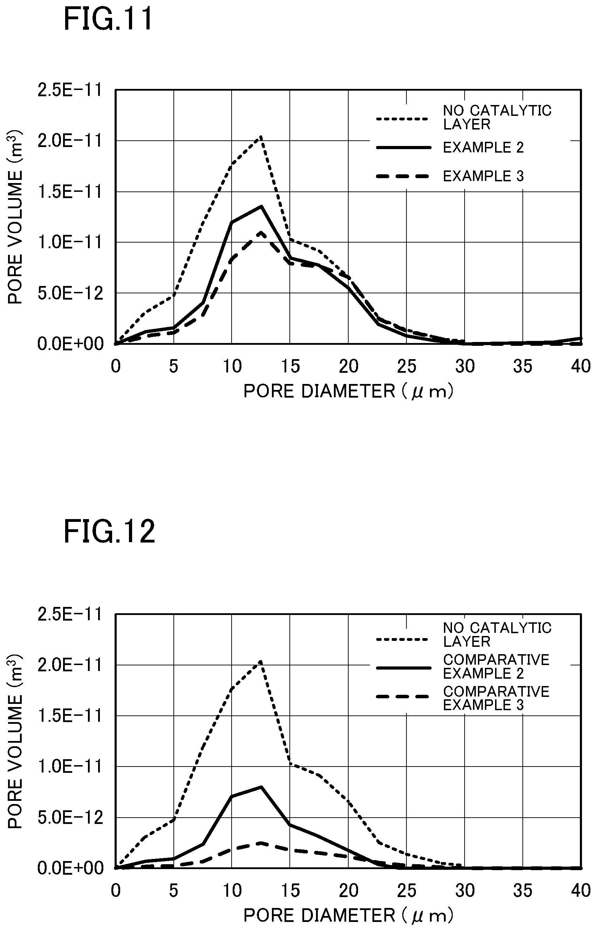

FIG. 11 shows pore distributions of the pores 16 in the support alone without the catalytic layer 20 and the PF samples of Examples 2 and 3. FIG. 12 shows the pore distributions of the pores 16 in the support alone without the catalytic layer 20 and the PF samples of Comparative Examples 2 and 3. As illustrated in FIGS. 11 and 12, the pore volume of the pores 16 decreases by forming the catalytic layer 20, which is considered to be a cause of increase in pressure loss. It was also found that the degree of decrease in pore volume is suppressed in the PF samples of Examples 2 and 3 in which the density of the catalytic layer 20 satisfies the range, compared to the PF samples of Comparative Examples 2 and 3 in which the density does not satisfy the range.

That is, it is considered that by setting the density of the catalytic layer 20 to the range, the decrease in pore volume of the pores 16 due to the formation of the catalytic layer 20 is suppressed, and as a result, the increase in pressure loss is suppressed. In other words, by setting the density of the catalytic layer 20 in the filter 10 to the range, the increase in pressure loss can be suppressed even when the pores 16 of the support 10A are reduced in diameter.

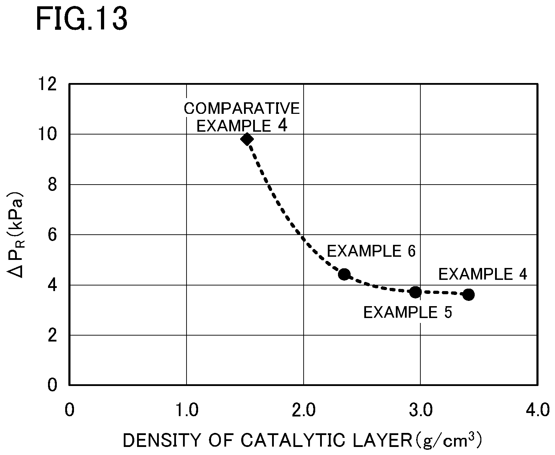

FIG. 13 shows a relationship between the density of the catalytic layer 20 and the pressure loss in the PF samples of Examples 4 to 6 and Comparative Example 4. As illustrated in FIG. 13, the catalytic layer 20 having a density of 2.0 g/cm$^3$ or higher is effective in suppression of the increase in pressure loss. In light of suppressing the increase in pressure loss, the density is preferably from 2.3 g/cm$^3$ to 4.0 g/cm$^3$ inclusive, more preferably from 2.3 g/cm$^3$ to 3.5 g/cm$^3$ inclusive, particularly preferably from 2.35 g/cm$^3$ to 3.43 g/cm$^3$ inclusive.

[Content of Each Catalyst Material in Catalytic Layer]

The density of the catalytic layer 20 can be adjusted by the composition and content of each catalyst material contained in the catalytic layer 20.

When the catalytic layer 20 contains, as a support material, at least one of Ce-containing Zr-based composite oxide, Ce-free Zr-based composite oxide, or alumina-based composite oxide, these materials have different densities as shown in Table 2 to be described later. **In** particular, the alumina-based composite oxide tends to have a lower density than the Ce-containing Zr-based composite oxide and the Ce-free Zr-based composite oxide. This is considered to be related to the atomic weight of the constituent elements of the material. Therefore, the density of the catalytic layer 20 can be made in the range by adjusting the constituent elements of the material and the content of the material.

**In** the case where the catalyst material contains a Ce-containing Zr-based composite oxide, the content of the catalyst material containing the Ce-containing Zr-based composite oxide in the catalytic layer is preferably from 40 mass% to 60 mass% inclusive, more preferably from 45 mass% to 56 mass% inclusive, in light of effectively suppressing the increase in pressure loss by adjusting the density of the catalytic layer 20.

**In** the case where the catalyst material contains a Ce-free Zr-based composite oxide, the content of the catalyst material containing the Ce-free Zr-based composite oxide in the catalytic layer is preferably from 20 mass% to 50 mass% inclusive, more preferably from 42 mass% to 47 mass% inclusive, in light of effectively suppressing the increase in pressure loss by adjusting the density of the catalytic layer 20.

The content of the catalyst material containing the alumina-based composite oxide in the catalytic layer is preferably less than 10 mass%, more preferably 9 mass% or less, in light of effectively suppressing the increase in pressure loss by adjusting the density of the catalytic layer 20.

The densities of the Ce-containing Zr-based composite oxide and the Ce-free Zr-based composite oxide are, for example, specifically from 4 g/cm$^3$ to 7 g/cm$^3$ inclusive, although not intended to be limiting. The density of the alumina-based composite oxide is preferably smaller than the densities of the Ce-containing Zr-based composite oxide and the Ce-free Zr-based composite oxide. The density of the alumina-based composite oxide is, for example, specifically from 2 g/cm$^3$ to 4 g/cm$^3$ inclusive, although not intended to be limiting. The same density can be employed when a noble metal is supported on these support materials.

[PM Capturing Rate and Pressure Loss]

As illustrated in Table 3 to be described later, it was found that in the PF samples of Examples 1 to 9, the PM capturing rate was 90% or higher, particularly in the PF samples of Examples 1 to 8, the PM capturing rate was 95% or higher. Further, as illustrated in FIG. 7, in Examples 10 to 13, the PM capturing rate was 67% or higher, particularly in Examples 10 an 11, the PM capturing rate was 93% or higher. As illustrated in FIG. 8, in Examples 14 to 16, the PM capturing rate was 85% or higher, particularly in Examples 14 and 15, the PM capturing rate was 90% or higher.

This indicates that the filter 10 according to the present disclosure exhibits an excellent PM capturing rate and effectively suppresses the increase in pressure loss.

The pressure loss may vary depending on the composition of the support and the catalytic layer and the measurement method. Therefore, although not intended to be limiting, the pressure loss $\Delta P_R$ (kPa) measured using a rig apparatus described later is preferably 7 kPa or less.

[Exhaust Gas Purification Performance]

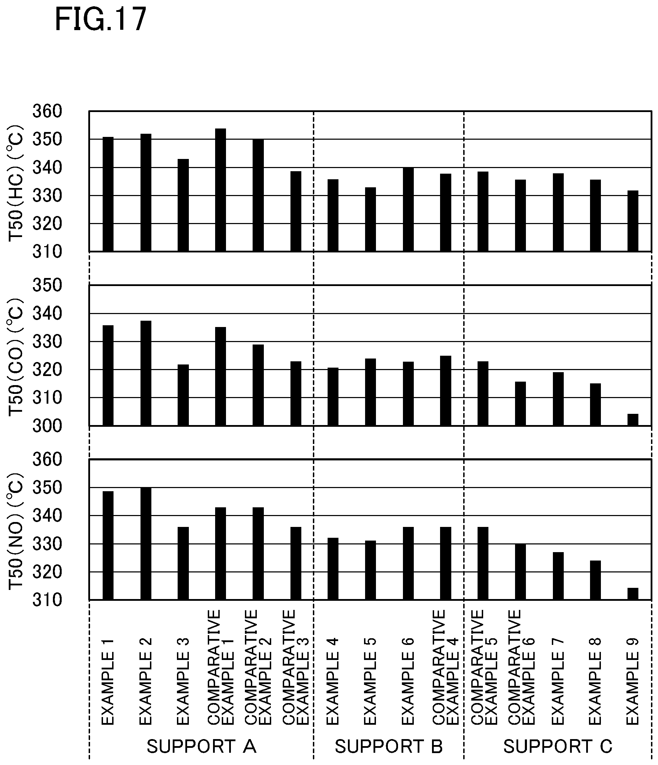

As illustrated in Table 3 and FIG. 17, which will be described later, it is found that the filter 10 according to the present disclosure is also excellent in exhaust gas purification performance.

<Method for Producing Catalyzed Particulate Filter>

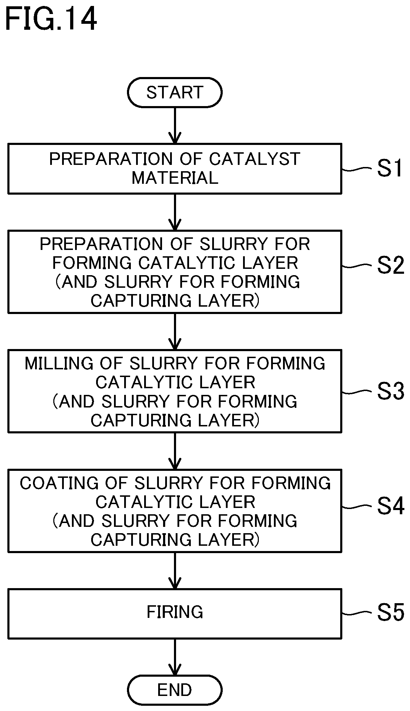

As illustrated in FIG. 14, an example of the method for producing a filter 10 includes: a catalyst material preparing step S1; a slurry preparing step S2; a milling step S3; a coating step S4; and a firing step S5.

In the catalyst material preparing step S1, a catalyst material contained in a catalytic layer 20 and, if necessary, a capturing layer 22 is prepared. The catalyst material may be a commercially available product or may be produced. For example, the Ce-containing Zr-based composite oxide and Ce-free Zr-based composite oxide can be produced by a generally known co-precipitation method or any other method. When a support material supports a noble metal catalyst, the noble metal catalyst can be supported by a generally known evaporation drying method.

In the slurry preparing step S2, the raw material of the catalytic layer 20, i.e., the catalyst material to be contained in the catalytic layer 20, other components as needed, and a solvent are mixed to form a slurry for forming a catalytic layer. In the case of providing the capturing layer 22, in addition to the slurry for forming a catalytic layer, the raw material of the capturing layer 22, i.e., the catalyst material to be contained in the capturing layer 22, other components as needed, and a solvent are mixed to form a slurry for forming a capturing layer. The solvent is not particularly limited, and a solvent such as ion-exchange water, generally used in production of the catalyzed particulate filter, can be used.

In the milling step S3, the slurry for forming a catalytic layer is milled. The milling can be performed by a generally used mixer such as a ball mill. At this time, the milling is performed so that the mean particle diameter D50 of the slurry for forming a catalytic layer is a predetermined value, specifically, for example, from 0.1 $\mu$m to 0.5 $\mu$m inclusive, preferably from 0.1 $\mu$m to 0.4 $\mu$m inclusive. Thus, when the support 10A is coated with the slurry for forming a catalytic layer, the slurry enters pores 16 inside the partitions, and deposited mainly on the wall surfaces 16A.

In the case of forming the capturing layer 22, the slurry for forming a capturing layer may also be milled by the same method as for the slurry for forming a catalytic layer. The slurry for forming a capturing layer is milled so that the mean particle diameter D50 is, for example, from 5 $\mu$m to 10 $\mu$m inclusive, preferably from 6 $\mu$m to 8 $\mu$m inclusive. When the support 10A is coated with the slurry for forming a capturing layer, the slurry hardly enters the pores 16 inside the partitions 15, and is deposited mainly on the wall surfaces 15A of the partitions 15 facing the cells 12.

In the coating step S4, the support 10A is coated with the slurry for forming a catalytic layer and, if necessary, the slurry for forming a capturing layer. In the case of forming the capturing layer 22, the support 10A is coated with the slurry for forming a catalytic layer and then coated with the slurry for forming a capturing layer. The slurry coating may be performed from either the upstream end or the downstream end of the support 10A, but it is preferred that the support 10A is coated with the slurry for forming a catalytic layer from the downstream end, and then coated with the slurry for forming a capturing layer from the upstream end. This can prevent the slurries from mixing with each other, and the catalytic layer 20 and the capturing layer 22 can be easily formed in their respective areas.

After the slurry coating, the support 10A is dried, and fired (the firing step S5). The firing conditions are not particularly limited, and can be conditions used in general production of the catalyzed particulate filter such as 500°C $\times$ 2 hr. Accordingly, the catalyzed particulate filter is obtained.

[Examples]

Next, specific examples will be described.

<Examples 1 to 16 and Comparative Examples 1 to 6>

Samples of catalyzed particulate filters of Examples 1 to 16 and Comparative Examples 1 to 6 (hereinafter also referred to as "PF samples") were produced. Table 1 shows the details of composition of the PF samples. In Table 1, "g/L" indicates the amount of components per 1 L of the support volume. In addition, in Table 1, "Pd/Rh" means "Pd or Rh."

EP 4 699 686 A1

[Table 1]

| | Reference Numeral | Support | | | Catalytic Layer | | | | | | | | Capturing Layer |
|---|---|---|---|---|---|---|---|---|---|---|---|---|---|
| | | Number of Cells Per Square Inch | Partition Thickness | Mean Pore Diameter D50 | Coating Amount of Catalyst Material | Coating amount and Percentage of Each Catalyst Material | | | | | | Density | Coating Amount of Catalyst Material |
| | | | | | | Pd/Rh-Supported CeZr-based Composite Oxide | | Rh-Supported Zr-based Composite Oxide | | Pd-Supported Activated Alumina | | | |
| | | | | | | Pd/Rh-CeZrNdLaYOx | | Rh-ZrLaYOx | | Pd-La$_2$O$_3$-Al$_2$O$_3$ | | | |
| | | cpsi | mil | $\mu$ m | g/L | g/L | mass% | g/L | mass% | g/L | mass% | g/cm$^3$ | g/L |
| Example 1 | A | 200 | 9.5 | 7 | 44 | 24.4 | 55.5 | 19.6 | 44.5 | - | - | 3.35 | - |
| Example 2 | | 200 | 9.5 | 7 | 65 | 36.0 | 55.4 | 29.0 | 44.6 | - | - | 3.31 | - |
| Example 3 | | 200 | 9.5 | 7 | 86 | 47.6 | 55.3 | 38.4 | 44.7 | - | - | 3.40 | - |
| Comparative Example 1 | | 200 | 9.5 | 7 | 43 | 27.9 | 64.9 | 7.3 | 17.0 | 7.8 | 18.1 | 1.52 | - |
| Comparative Example 2 | | 200 | 9.5 | 7 | 64 | 41.5 | 64.8 | 10.9 | 17.0 | 11.6 | 18.1 | 1.51 | - |
| Comparative Example 3 | | 200 | 9.5 | 7 | 85 | 55.1 | 64.8 | 14.5 | 17.1 | 15.4 | 18.1 | 1.51 | - |
| Example 4 | B | 300 | 8.5 | 7 | 80 | 44.3 | 55.4 | 35.7 | 44.6 | - | - | 3.31 | - |
| Example 5 | | 300 | 8.5 | 7 | 80 | 40.7 | 50.9 | 35.7 | 44.6 | 3.6 | 4.5 | 2.96 | - |
| Example 6 | | 300 | 8.5 | 7 | 80 | 37.2 | 46.5 | 35.7 | 44.6 | 7.1 | 8.9 | 2.35 | - |
| Comparative Example 4 | | 300 | 8.5 | 7 | 80 | 30.1 | 37.6 | 35.7 | 44.6 | 14.2 | 17.8 | 1.51 | - |
| Comparative Example 5 | C | 300 | 8.5 | 15 | 80 | 51.9 | 64.9 | 13.6 | 17.0 | 14.5 | 18.1 | 1.53 | 20 |
| Comparative Example 6 | | 300 | 8.5 | 15 | 100 | 64.9 | 64.9 | 17.0 | 17.0 | 18.1 | 18.1 | 1.55 | 20 |
| Example 7 | | 300 | 8.5 | 15 | 80 | 44.3 | 55.4 | 35.7 | 44.6 | - | - | 3.36 | 20 |
| Example 8 | | 300 | 8.5 | 15 | 100 | 55.4 | 55.4 | 44.6 | 44.6 | - | - | 3.32 | 20 |
| Example 9 | | 300 | 8.5 | 15 | 160 | 88.6 | 55.4 | 71.4 | 44.6 | - | - | 3.17 | 20 |
| Example 10 | D | 300 | 8.5 | 5 | 80 | 44.3 | 55.4 | 35.7 | 44.6 | - | - | 3.43 | - |

(continued)

| | Reference Numeral | Support | | | | Catalytic Layer | | | | | | | | Capturing Layer |
|---|---|---|---|---|---|---|---|---|---|---|---|---|---|---|
| | | Number of Cells Per Square Inch | Partition Thickness | Mean Pore Diameter D50 | Coating Amount of Catalyst Material | Coating amount and Percentage of Each Catalyst Material | | | | | | Density | | Coating Amount of Catalyst Material |
| | | | | | | Pd/Rh-Supported CeZr-based Composite Oxide | | Rh-Supported Zr-based Composite Oxide | | Pd-Supported Activated Alumina | | | | |
| | | | | | | Pd/Rh-CeZrNdLaYOx | | Rh-ZrLaYOx | | Pd-La$_2$O$_3$-Al$_2$O$_3$ | | | | |
| | | cpsi | mil | $\mu$ m | g/L | g/L | mass% | g/L | mass% | g/L | mass% | g/cm$^3$ | g/L |
| Example 11 | E | 300 | 8.5 | 9 | 80 | 44.3 | 55.4 | 35.7 | 44.6 | - | - | 3.37 | - |
| Example 12 | C | 300 | 8.5 | 15 | 80 | 44.3 | 55.4 | 35.7 | 44.6 | - | - | 3.35 | - |
| Example 13 | G | 300 | 8.5 | 19 | 80 | 44.3 | 55.4 | 35.7 | 44.6 | - | - | 3.40 | - |
| Example 14 | D | 300 | 8.5 | 5 | 80 | 44.3 | 55.4 | 35.7 | 44.6 | - | - | 3.31 | 20 |
| Example 15 | F | 300 | 8.5 | 17 | 80 | 44.3 | 55.4 | 35.7 | 44.6 | - | - | 3.20 | 20 |
| Example 16 | G | 300 | 8.5 | 19 | 80 | 44.3 | 55.4 | 35.7 | 44.6 | - | - | 3.25 | 20 |

[Material]

· Support

As supports A to G, commercially available cordierite wall-flow type base materials (volume: 1.6 L) were used. In the PM capturing rate measurement test and the pressure loss measurement test, samples after coating were used for evaluation. In the purification performance evaluation test, the supports were processed to have a volume of 25 mL after engine durability process, and an evaluation was performed using a rig evaluation equipment. Table 1 shows the details of the composition of the supports.

In the PM capturing rate measurement test of the supports to be described later, multiple supports having the same composition as that of the support A except for the mean pore diameter D50 were used. The mean pore diameter D50 of these supports was 5 μm to 22 μm. For these supports, the PM capturing rates of the supports alone were determined by the method described below.

· Support Material

Table 2 shows the details of the composition of the support material.

**[Table** 2]

| | Notation | Mean Particle Diameter D50 | Content Percentage of Constituent Elements | Powder Density |
|---|---|---|---|---|
| | | $\mu$ m | mass% | g/cm$^3$ |
| CeZr-based Composite Oxide | CeZrNdLaYOx | 3.8 | $CeO_2/ZrO_2/La_2O_3/ Nd_2O_3/Y_2O_3$ =10/75/5/5/5 | 5.597 |
| Zr-based Composite Oxide | ZrLaYOx | 2.9 | $ZrO_2/La_2O_3/Y_2O_3$ =85/5/10 | 5.476 |
| Activated Alumina | $La_2O_3$-$Al_2O_3$ | 29 | $La_2O_3/Al_2O_3$ =5/95 | 3.077 |

The preparation of CeZrNdLaYOx powder is as follows. A solution obtained by dissolving cerium nitrate hexahydrate, zirconium oxynitrate, neodymium nitrate hexahydrate, lanthanum nitride, and yttrium nitride in ion-exchange water was mixed with an 8-fold diluted solution of 28 mass% ammonia water and neutralized to obtain a coprecipitate. The coprecipitate was then washed with water by centrifugation, dried at 150°C in the air for a whole day and night, pulverized with a ball mill, and thereafter fired at 500°C for two hours in the air, thereby obtaining a CeZrNdLaYOx powder.

The method for preparing a ZrLaYOx powder is as follows. A solution obtained by dissolving a solution of zirconium oxynitrate, lanthanum nitride, and yttrium nitride in ion-exchange water was mixed with an 8-fold diluted solution of 28 mass% ammonia water and neutralized to obtain a coprecipitate. The coprecipitate was then washed with water by centrifugation, dried at 150°C in the air for a whole day and night, pulverized with a ball mill, and thereafter fired at 500°C for two hours in the air, thereby obtaining a CeZrNdLaYOx powder.

As the activated alumina powder, a commercially available product was used.

The density of each support material was measured by the method described below.

· Noble Metal Catalyst

Pd and Rh as noble metal catalysts were supported on support materials. Specifically, in Examples 5 and 6 and Comparative Examples 1 to 6 in which activated alumina powder was contained as a support material, Pd was supported on the activated alumina powder, and Rh was supported on the CeZrNdLaYOx powder and the ZrLaYOx powder. In Examples 1 to 4 and 7 to 9 in which activated alumina powder was not contained as a support material, Pd was supported on the CeZrNdLaYOx powder, and Rh was supported on the ZrLaYOx powder.

Each noble metal catalyst was supported on each support material by evaporation drying method. Specifically, a slurry was prepared by adding ion-exchange water to the support material, and palladium(II) nitride solution or rhodium nitride solution was added thereto and stirred. Thereafter, the moisture was completely evaporated from the resultant, and the resultant was fired at 500°C for two hours in the air, thereby obtaining a catalyst material in which the noble metal catalyst had been supported on the support material.

The amounts of the noble metal catalysts contained in the PF sample were Pd: 1.28 g/L and Rh: 0.32 g/L in all of the examples and comparative examples.

[Preparation of PF Sample]

· Slurry for forming Catalytic Layer

Ion-exchange water was added to the catalyst material prepared as described above, and mixed to obtain a slurry. The slurry was then fed into a ball mill and pulverized with zirconia beads to obtain a slurry for forming a catalytic layer having a mean particle diameter D50 of 0.2 $\mu$m.

. Slurry for Forming Capturing Layer

The slurry was prepared and pulverized in the same manner as for the slurry for forming a catalytic layer, thereby obtaining a slurry for forming a capturing layer having a mean particle diameter D50 of 7 $\mu$m. In any of the composition, the catalyst material contained in the capturing layer contained 11.75 g/L CeZrNdLaYOx powder, 4.36 g/L ZrLaYOx powder, and 3.55 g/L activated alumina powder.

· Formation of Catalytic Layer

The slurry for forming a catalytic layer was injected from the downstream end of the support and dried to form a catalytic layer on the wall surfaces inside the partitions. In Examples 1 to 6 and Comparative Examples 1 to 4, after the formation of the catalytic layer, the catalytic layer was fired at 500°C for two hours, thereby obtaining a PF sample. The catalytic layer was formed so as to have a uniform thickness over the entire length of the support.

· Formation of Capturing Layer

In Examples 7 to 9 and 14 to 16 and Comparative Examples 5 and 6, after the formation of the catalytic layer, the slurry for forming a capturing layer was injected from the upstream end of the support, and dried, thereby forming a capturing layer on the wall surfaces of the partitions facing the cells. After the formation of the capturing layer, the capturing layer was fired at 500°C for two hours, thereby forming a PF sample. The capturing layer was formed so as to have a uniform thickness over the entire length of the support.

<Mean Pore Diameters D50 of Support and PF Sample>

The 50% values of the pore distributions determined from the three-dimensional shape data obtained by X-ray CT measurement of the supports and the PF samples were taken as the mean pore diameters D50 of the supports and the PF samples.

<Mean Particle Diameter D50 of Material>

The 50% values in the volume-based particle size distributions of materials of support materials, catalyst materials, slurries, and the like measured using a laser diffraction particle size analyzer were defined as the mean particle diameters D50.

<Density of Support Material>

The following volume measurements were performed by the constant volume expansion method. The densities of the powders were calculated from the mass measured in parallel with the volume measurements.

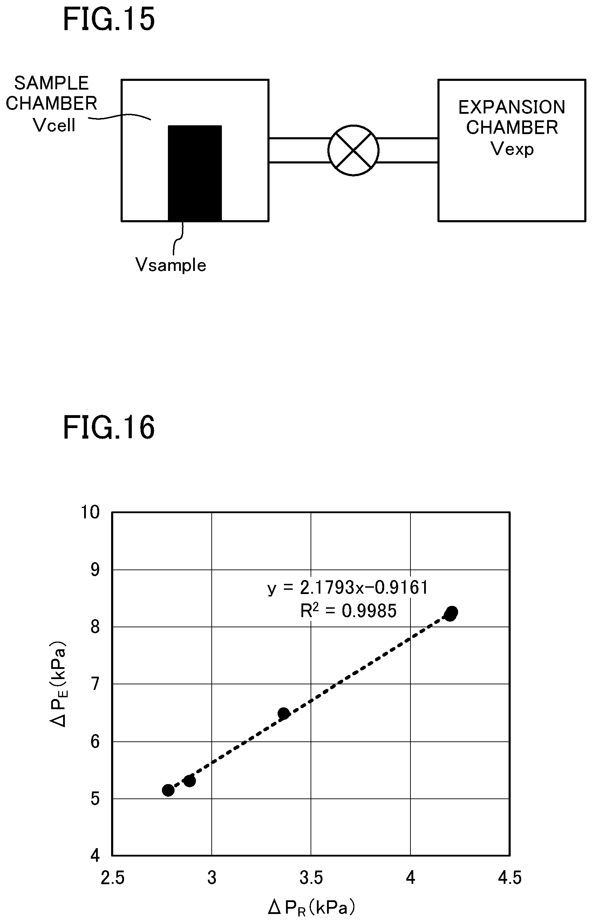

Volume measurement: As illustrated in FIG. 15, a sample with a volume Vsamp is loaded into a sample chamber with a constant volume Vcell, and after a constant pressure P1 is established, a valve is opened to connect an expansion chamber with another constant volume Vexp to the sample chamber. The gas in the system expands and the pressure becomes P2. The volume is obtained from the relational expression (1) of the pressure and the volume according to the Boyle-Charles' law.

$$Vsample = Vcell - Vexp/(P1/P2 - 1) \cdots (1)$$

<Density of Catalytic Layer of PF Sample>

The density of the catalytic layer of each PF sample was calculated as follows. First, the three-dimensional shape of each PF sample was obtained by X-ray CT measurement. The three-dimensional shape is segmented by image analysis, and the volume of the catalytic layer per unit volume was determined. The density of the catalytic layer was calculated by dividing the volume of the catalytic layer by the coating amount (g/L) of the catalyst material.

<Measurement of Pressure Loss>

[Case of Using Rig Apparatus]

Using a rig apparatus, air at the rated air volume was passed through each PF sample, and the outlet pressure was measured to determine the pressure loss $\Delta P_R$ (kPa) from the differential pressure. The test air volume was based on the rated air volume, and the measurement was carried out at a flow rate of 10 Nm$^3$/min and a room temperature of 23 $\pm$2°C.

[Case of Using Engine Bench]

The PM capturing rate measurement to be described later is performed using an engine bench. In order to confirm that the measured value of the pressure loss in the case of using the rig apparatus is correlated with the measured value of the pressure loss in the case of using an engine bench, verification was performed using the engine bench.
Using an engine with a displacement of 2.5 L, each PF sample was mounted downstream of a three-way catalyst, and a pressure loss $\Delta P_E$ (kPa) was determined from a differential pressure at a mass flow rate of 80 g/s.
As can be seen from FIG. 16, there was a proportional correlation between the pressure loss $\Delta P_R$ and the pressure loss $\Delta P_E$.

<Measurement of PM Capturing Rate>

The support was attached to an exhaust pipe of a gasoline reciprocating engine having a displacement of 2.5 L, and the engine speed and the charge rate were set so that the gas temperature before the support became 670°C. A PM analyzer was connected to the exhaust pipe before and after the support, the PM amount X before passing through the support and the PM amount Y after passing through the support were measured, and the PM capturing rate was calculated based on the following equation (2).

$$\text{PM Capturing Rate (\%)} = [(X - Y)/X] \times 100 \cdots (2)$$

<Purification Performance Evaluation Test>

The PF samples of Examples 1 to 9 and Comparative Examples 1 to 6 were each attached to the exhaust pipe of the engine with a displacement of 2.5 L. The engine speed and load were set so that the catalyst temperature reached 850°C, and a bench aging treatment was performed by exposing each PF sample to the exhaust gas of the engine for 100 hours.
From each PF sample after the bench aging treatment, a core sample with a support volume of approximately 25 mL (25.4 mm in diameter and 50 mm in length) was cut out and attached to a fixed-bed flow reactor. Subsequently, a light-off performance evaluation test was conducted for the purification of HC/CO/NO. Table 3 and FIG. 17 show the results.

[Table 3]

|  | [Rig Evaluation] Pressure Loss $\Delta P_R$ | [Engine Evaluation] PM Capturing Rate | Purification Performance After Engine Durability Process | | |
|---|---|---|---|---|---|
|  |  |  | T50(HC) | T50(CO) | T50(NO) |
|  | kPa | % | °C | °C | °C |
| Example 1 | 3.4 | 97.4 | 351 | 336 | 349 |
| Example 2 | 3.8 | 96.8 | 352 | 337 | 350 |
| Example 3 | 5.5 | 96.0 | 343 | 322 | 336 |

(continued)

| | [Rig Evaluation] Pressure Loss $\Delta P_R$ | [Engine Evaluation] PM Capturing Rate | Purification Performance After Engine Durability Process | | |
|---|---|---|---|---|---|
| | | | T50(HC) | T50(CO) | T50(NO) |
| | kPa | % | °C | °C | °C |
| Comparative Example 1 | 4.3 | 96.5 | 354 | 335 | 343 |
| Comparative Example 2 | 8.3 | 95.8 | 350 | 329 | 343 |
| Comparative Example 3 | 10.7 | 95.9 | 339 | 323 | 336 |
| Example 4 | 3.6 | 97.4 | 336 | 321 | 332 |
| Example 5 | 3.7 | 96.9 | 333 | 324 | 331 |
| Example 6 | 4.4 | 96.2 | 340 | 323 | 336 |
| Comparative Example 4 | 9.8 | 95.3 | 338 | 325 | 336 |
| Comparative Example 5 | 6.3 | 96.4 | 339 | 323 | 336 |
| Comparative Example 6 | 7.4 | 95.4 | 336 | 316 | 330 |
| Example 7 | 4.9 | 96.8 | 338 | 319 | 327 |
| Example 8 | 5.3 | 95.6 | 336 | 315 | 324 |
| Example 9 | 6.7 | 92.5 | 332 | 304 | 314 |

It was found through comparison between Examples 1 to 3 and Comparative Examples 1 to 3 using a support A that when the catalyst coating amount inside the partitions is approximately the same, approximately the same purification performance was exhibited in all three components.

It was found through comparison between Examples 4 to 8 and Comparative Examples 4 to 6 using a support B or C that when the catalyst coating amount inside the partitions is approximately the same, the PF samples in the examples exhibited approximately the same or slightly superior purification performance in all three components. It was also found that in Example 9, in which the catalyst coating amount inside the partitions was increased, the purification performance, particularly for CO and NO, was improved.

The purification performance in the case of using the supports B and C tends to be slightly superior to the purification performance in the case of using the support A as a whole, but this is considered to be due to the difference in the cell structure (the number of cells per square inch and the partition thickness) between the supports B and C and the support A.

The present disclosure is extremely useful in the field of the catalyzed particulate filter.

DESCRIPTION OF REFERENCE CHARACTERS

10      Catalyzed Particulate Filter
10A    Support
11      Exhaust Passage
12      Cell
13      Cell
14      Plug
15      Partition
15A    Wall Surface (Facing Cell 12 of Partition 15)
15B    Wall Surface (Facing Cell 13 of Partition 15)
16      Pore (Exhaust Gas Passage)
16A    Wall Surface of (Pore) (Exhaust Gas Passage Wall)
20      Catalytic Layer
22      Capturing Layer

**Claims**

1. A catalyzed particulate filter that is arranged in an exhaust passage of an engine and captures particulate matter in exhaust gas, the catalyzed particulate filter comprising:

   a support that is porous; and a catalytic layer provided on an exhaust gas passage wall of the support, the catalytic layer having a density of 2.0 g/cm$^3$ or higher.

2. The catalyzed particulate filter of claim 1, wherein
   a coating amount of a catalyst material contained in the catalytic layer is from 30 g/L to 200 g/L inclusive.

3. The catalyzed particulate filter of claim 1 or 2, wherein

   the support has multiple cells defined by porous partitions, and
   a mean pore diameter D50 of pores inside the partitions is from 7 $\mu$m to 15 $\mu$m inclusive.

4. The catalyzed particulate filter of any one of claims 1 to 3, wherein
   the catalyst material contained in the catalytic layer contains a support material made of at least one of Ce-containing Zr-based composite oxide, Ce-free Zr-based composite oxide, or alumina-based composite oxide.

5. The catalyzed particulate filter of claim 4, wherein
   a content of the catalyst material containing the alumina-based composite oxide in the catalytic layer is less than 10 mass%.

6. The catalyzed particulate filter of claim 4, wherein

   the catalyst material contains the Ce-containing Zr-based composite oxide, and
   a content of the catalyst material containing the Ce-containing Zr-based composite oxide in the catalytic layer is from 40 mass% to 60 mass% inclusive.

7. The catalyzed particulate filter of claim 4, wherein

   the catalyst material contains the Ce-free Zr-based composite oxide, and
   a content of the catalyst material containing the Ce-free Zr-based composite oxide in the catalytic layer is from 20 mass% to 50 mass% inclusive.

8. The catalyzed particulate filter of any one of claims 1 to 7, wherein
   a mean particle diameter D50 of the catalyst material contained in the catalytic layer is from 0.1 $\mu$m to 0.5 $\mu$m inclusive.

9. The catalyzed particulate filter of any one of claims 1 to 8, wherein

   the support has multiple cells defined by porous partitions, and
   the catalyzed particulate filter further comprises a capturing layer that is formed on surfaces of the partitions facing the cells and captures the particulate matter.

10. A method for producing a catalyzed particulate filter that is arranged in an exhaust passage of an engine and captures particulate matter in exhaust gas,

    the catalyzed particulate filter including: a support that is porous; and a catalytic layer provided on an exhaust gas passage wall of the support,
    the catalytic layer having a density of 2.0 g/cm$^3$ or higher,
    the method comprising: mixing a raw material of the catalytic layer and a solvent to form a slurry;
    milling the slurry to make a mean particle diameter D50 of the slurry a predetermined value; and
    coating the exhaust gas passage wall of the support with the slurry, in this order.

## FIG.1

## FIG.2

## FIG.3

## FIG.4

## FIG.5

## FIG.6

## FIG.7

## FIG.8

## FIG.9

## FIG.10

## FIG.11

## FIG.12

# FIG.13

# FIG.14

```
                    ┌─────────────┐
                    │    START    │
                    └──────┬──────┘
                           │
                           ▼
      ┌──────────────────────────────────┐
      │     PREPARATION OF CATALYST       │──── S1
      │            MATERIAL               │
      └──────────────────┬───────────────┘
                         │
                         ▼
      ┌──────────────────────────────────┐
      │     PREPARATION OF SLURRY FOR     │
      │      FORMING CATALYTIC LAYER      │──── S2
      │     (AND SLURRY FOR FORMING       │
      │         CAPTURING LAYER)          │
      └──────────────────┬───────────────┘
                         │
                         ▼
      ┌──────────────────────────────────┐
      │    MILLING OF SLURRY FOR FORMING  │
      │          CATALYTIC LAYER          │──── S3
      │      (AND SLURRY FOR FORMING      │
      │          CAPTURING LAYER)         │
      └──────────────────┬───────────────┘
                         │
                         ▼
      ┌──────────────────────────────────┐
      │   COATING OF SLURRY FOR FORMING   │
      │          CATALYTIC LAYER          │──── S4
      │      (AND SLURRY FOR FORMING      │
      │          CAPTURING LAYER)         │
      └──────────────────┬───────────────┘
                         │
                         ▼
      ┌──────────────────────────────────┐
      │              FIRING               │──── S5
      └──────────────────┬───────────────┘
                         │
                         ▼
                  ┌─────────────┐
                  │     END     │
                  └─────────────┘
```

# FIG.15

# FIG.16

# FIG.17

<table>
<tr><td>Europäisches<br>Patentamt<br>European<br>Patent Office<br>Office européen<br>des brevets</td><td align="center">**EUROPEAN SEARCH REPORT**</td><td>**Application Number**<br><br>EP 25 19 2442</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/276567 A1 (ONOE RYOTA [JP] ET AL) 3 September 2020 (2020-09-03) | 1-4,6,9, 10 | INV.<br>B01D53/94<br>B01J23/63 |
| A | * paragraphs [0049], [0061], [0075] *<br>* figure 4 *<br>* example 1 *<br>----- | 5,7,8 | |
| X | US 2021/283589 A1 (SUGIURA KOJI [JP] ET AL) 16 September 2021 (2021-09-16) | 1,2,9,10 | |
| A | * paragraphs [0168] - [0181] *<br>----- | 5,7,8 | |
| | | | **TECHNICAL FIELDS SEARCHED (IPC)**<br><br>B01D<br>B01J |

The present search report has been drawn up for all claims

| Place of search | Date of completion of the search | Examiner |
|---|---|---|
| The Hague | 14 January 2026 | Hackenberg, Stefan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
......................................................................................
& : member of the same patent family, corresponding
    document

EPO FORM 1503 03.82 (P04C01)

EP 4 699 686 A1

## ANNEX TO THE EUROPEAN SEARCH REPORT
## ON EUROPEAN PATENT APPLICATION NO.

EP 25 19 2442

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2026

| Patent document cited in search report | | Publication date | Patent family member(s) | | Publication date |
|---|---|---|---|---|---|
| US 2020276567 | A1 | 03-09-2020 | CN | 110446551 A | 12-11-2019 |
| | | | EP | 3581271 A1 | 18-12-2019 |
| | | | US | 2020276567 A1 | 03-09-2020 |
| | | | WO | 2018173557 A1 | 27-09-2018 |
| US 2021283589 | A1 | 16-09-2021 | CN | 113385033 A | 14-09-2021 |
| | | | DE | 102021100520 A1 | 16-09-2021 |
| | | | JP | 7381372 B2 | 15-11-2023 |
| | | | JP | 2021143625 A | 24-09-2021 |
| | | | US | 2021283589 A1 | 16-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023061613 A